## Europäisches Patentamt
## European Patent Office
## Office européen des brevets

(19)

(11) Publication number: **0 192 689**
**B1**

(12) # EUROPEAN PATENT SPECIFICATION

(45) Date of publication of patent specification: **04.01.89**

(51) Int. Cl.⁴: **B 60 P 1/64,** B 60 P 1/48

(21) Application number: **85904251.7**

(22) Date of filing: **21.08.85**

(86) International application number:
**PCT/FI85/00070**

(87) International publication number:
**WO 86/01469 13.03.86 Gazette 86/06**

(54) **APPARATUS FOR MOVING A CARGO CARRIER ONTO A VEHICLE AND FOR MOVING THE CARGO CARRIER OFF THE VEHICLE.**

(30) Priority: **23.08.84 FI 843327**

(43) Date of publication of application:
**03.09.86 Bulletin 86/36**

(45) Publication of the grant of the patent:
**04.01.89 Bulletin 89/01**

(84) Designated Contracting States:
**AT BE CH DE FR GB IT LI LU NL SE**

(56) References cited:
**EP-A-0 012 145**
**EP-A-0 107 892**
**DE-A-2 651 258**
**SE-B- 327 169**
**US-A-4 175 904**

(73) Proprietor: **Oy Partek Ab**
**PL 39**
**SF-21201 Raisio (FI)**

(72) Inventor: **WULF, Per**
**Lilla torget 3**
**S-523 00 Ulricehamn (SE)**
Inventor: **PETERSON, Jan**
**Box 108**
**S-520 24 Blidsberg (SE)**

(74) Representative: **Topps, Ronald et al**
**D. YOUNG & CO 10 Staple Inn**
**London WC1V 7RD (GB)**

Courier Press, Leamington Spa, England.

**Description**

The present invention relates to apparatus for moving a cargo carrier, such as an interchangeable platform or container, onto a vehicle and for moving the carrier off the vehicle and for dumping the cargo from the carrier.

In the known prior art, so-called hook-device type apparatus are known for loading a platform or a container onto a vehicle. Such apparatus are described, e.g., in Finnish Patents 63,350 (GB 2 033 346) and 53,352.

When a platform or a container is being moved off a vehicle, at the initial stage of the movement a substantially horizontal path of movement of the grasping hook and, consequently, also of the platform or container rearwards is required before the platform or container is tilted. In the solution suggested in the Finnish Patent 63,350 (GB 2 033 346), corresponding to the first part of claim 1, this phase of horizontal shifting is produced by initially just pivoting an angle piece around its horizontal pivot shaft. It is only after this that a horizontal middle frame of the loading apparatus is pivoted, whereby the platform or container is tilted. In this prior-art apparatus a distance of horizontal shifting can only be accomplished up to about one metre.

EP—A—0 012 145 discloses apparatus which comprises a horizontal frame pivotable about a transverse horizontal shaft located at its rear part and connected to the vehicle chassis, a folding frame having one end pivotably connected at one end to the front end of the horizontal frame and its other end pivotably connected to a hook part, the upper end of the hook part being provided with a grasping member for engaging the cargo carrier, and an arm is attached by articulated joints between the hook part and the horizontal frame with the articulation point between the arm and the hook part being located at a lower level than the articulation point between the folding frame and the hook part, and the articulation point between the folding frame and the horizontal frame is located further forward than the articulation point between the folding frame and the horizontal frame and a main actuating device is connected between the vehicle chassis and the folding frame. Only a single main actuating device is provided and the apparatus is intended to lower or flatten the arcuate path of movement of the grasping member when the folding frame is pivoted. Such an arrangement does not provide a substantially horizontal hook path.

According to the present invention there is provided apparatus for moving a cargo carrier, such as an interchangeable platform or container, onto a vehicle and for moving the carrier from the vehicle and for dumping the cargo from the carrier, comprising a horizontal frame part pivotably connected by a transverse horizontal shaft located at its rear end to a horizontal rear frame part pivotably connected at its rear end to the vehicle chassis, an actuating device connected to the vehicle chassis for pivoting the horizontal frame part, a folding frame part having an end part pivotably attached to the front end of said horizontal frame part by a transverse horizontal shaft, and having a hook part provided at its upper end with a grasping member for engaging the cargo carrier, characterized in that the hook part is pivotably connected by a horizontal shaft to the end part and an arm is attached by respective articulated joints to the hook part and the horizontal frame part with the articulation joint between the arm and the hook part located lower than the articulation joint between the end part and the hook part and the articulation joint between the arm and the horizontal frame is located further forwardly than the articulation shaft between the end part and the horizontal frame, and that between the end part and the horizontal frame a second actuating device is provided for pivoting the end part relative to the horizontal frame part.

By means of the present invention, a horizontal shifting movement of about 2 metres can be achieved while the hook moves along a substantially horizontal very slightly curved path. The construction in accordance with the invention improves the usability of the equipment in covered areas of low height.

An embodiment of the invention will now be described, by way of an example, with reference to the accompanying drawings, in which:—

Figures 1 to 4 are schematic side elevations of a lorry provided with a known loading apparatus at different stages of loading,

Figure 5 is a plan view of the loading apparatus of Figures 1 to 4,

Figure 6 is a side view of the angle piece of the known loading apparatus,

Figures 7 and 8 show a truck with the known loading apparatus in two different dumping positions.

Figure 9 is a side view of an embodiment of an apparatus in accordance with the present invention in its resting position,

Figure 10 shows the apparatus of Figure 9 at the final stage of the horizontal movement, and

Figure 11 is an "exploded view" of the components of a part of the apparatus shown in Figures 9 and 10.

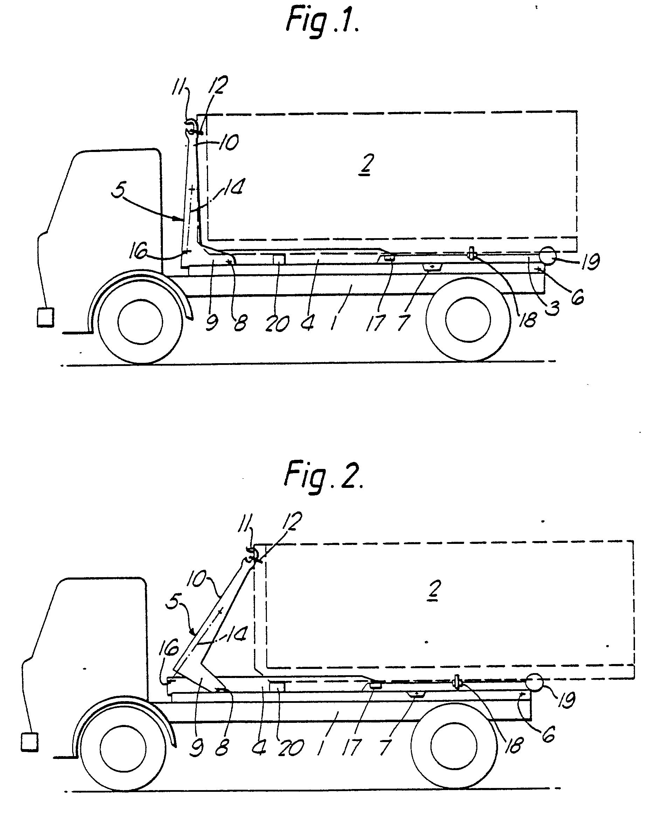

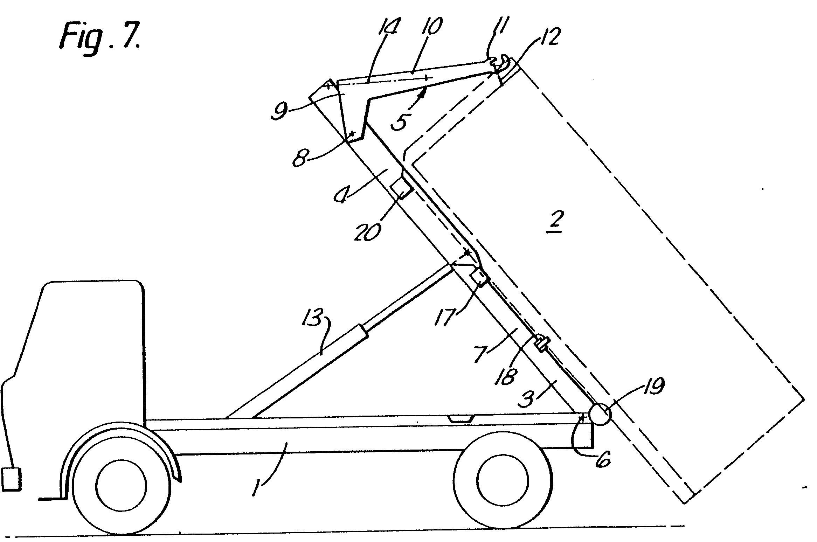

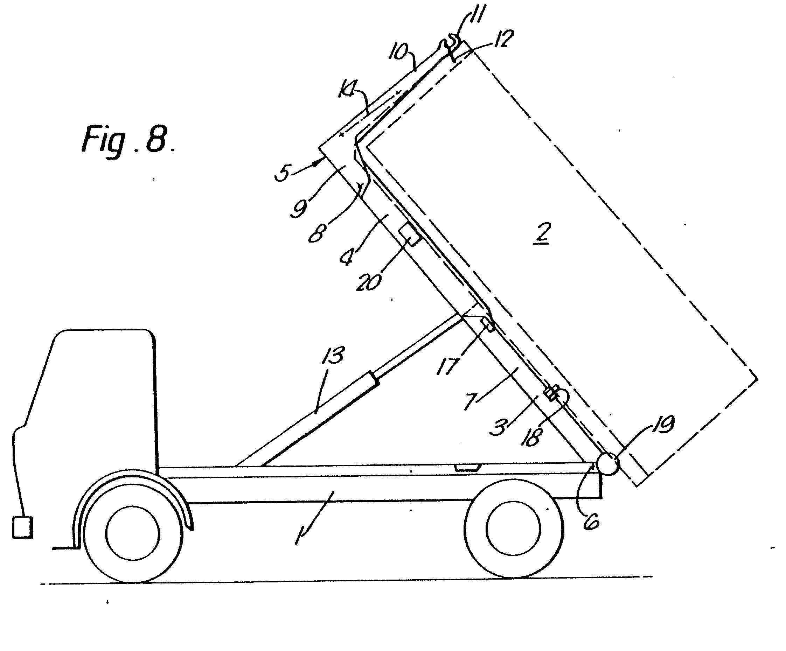

The loading apparatus shown in Figures 1 to 8 is known from GB 2 033 346 and comprises three frame parts; namely a rear frame part 3, a middle frame part 4, and an L-shaped folding frame or hook part 5. As shown in Figures 1 to 4, the rear frame part 3 is, at its rear end, attached to the rear end of the chassis beams 1 of the truck by articulation points 6. The rear frame part 3 can pivot around the articulation points 6 relative the chassis beams 1, i.e. the rear frame part 3 can be pivoted relative the chassis beams 1 to the ordinary dumping position (Figures 7 and 8). At the rear end of the rear frame 3, there are support rolls 19 for supporting and guiding the interchangeable platform 2 during loading. The rear frame part 3 also includes locking devices 18 for locking the interchangeable platform 2 to the loading apparatus. The middle frame part 4 is pivotably attached to the rear frame part 3 by means of a transverse horizontal shaft 7 or articulation points. Facing the end portion of the rear frame part 3 are laterally projecting stop pieces 17 provided on the middle frame part 4, said stop pieces 17 preventing pivoting of the middle frame part 4 to below the rear frame part 3.

As shown in Figures 3 to 5, two parallel main piston and cylinder devices 13 are fitted between the middle frame part 4 and the chassis beams 1 of the lorry.

To the front end of the middle frame part 4 or in immediate proximity if the front end of the middle frame part 4 is attached the hook part 5 by having the rear ends of horizontal portions 9 pivotable relative to a transverse horizontal shaft or articulation points 8.

The upper end of the vertical portion 10 of the hook part 5 is provided with a grasping member, such as a hook 11, for engaging a corresponding grasping part 12 provided on the front wall of the interchangeable platform or container 2. For the purpose of pivoting the hook part 5 and the middle frame part 4. One end of the piston and cylinder device 14 is attached to the vertical portion 10 of the hook part 5, and the other end to the front end of the middle frame part 4, forwardly of the articulation point 8 between the hook part 5 and the middle frame part 4.

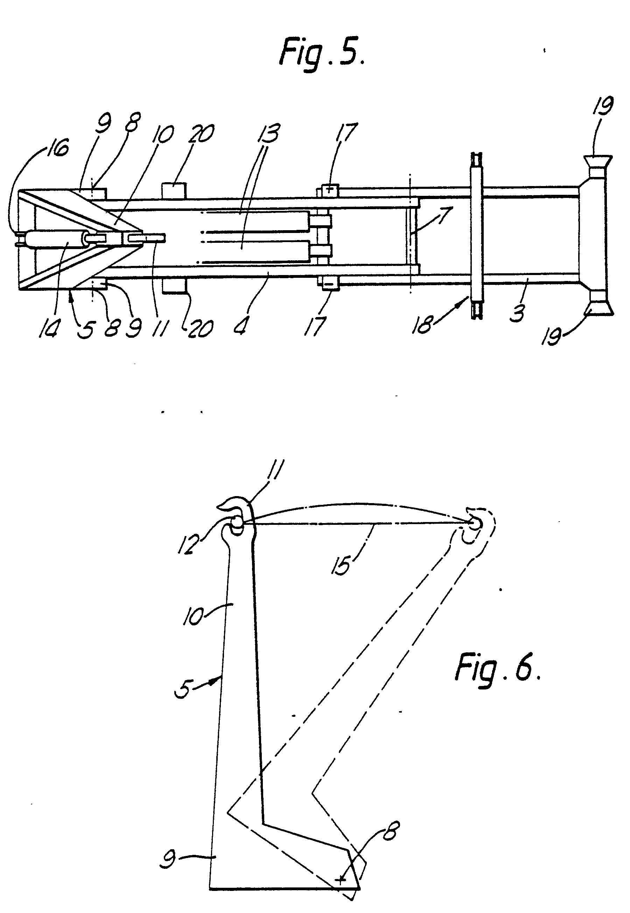

As shown in Figure 6, the grasping member 11 of the hook part 5 consists of a hook in which the play of the gap in the longitudinal direction of the vertical portion 10 of the hook part corresponds to the maximum difference in height on the path of the shape of an arc of a circle formed by the hook relative the middle frame part 4 when the hook part 5 is pivoted. The said arcuate path is formed when the hook part 5 is pivoted by means of the piston and cylinder device 14 relative the middle frame 4. The span 15 of the arc of a circle corresponds to the horizontal movement of the interchangeable platform or container 2.

In Figure 1 the interchangeable platform or container 2 is located on the chassis beams 1 of a lorry in the transport position. The hook 11 of the hook part 5 is engaged in the grasping part 12 of the interchangeable platform or container 2. The interchangeable platform or container 2 is locked by means of the locking means 18 relative the rear frame part 3.

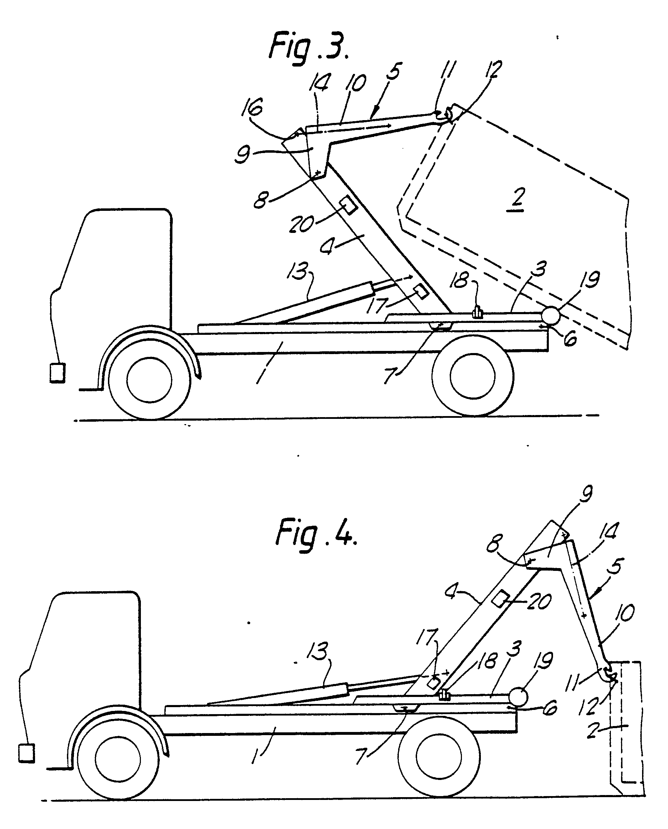

When the locking 18 are opened in the stage shown in Figure 1, the interchangeable platform or container 2 can be shifted rearwards by pivoting the hook part 5 to the position shown in Figure 2.

From the stage shown in Figure 2, by means of the main piston and cylinders 13, the middle frame part 4 can be pivoted relative the horizontal shaft 7 to the position shown in Figure 3, and further to the position shown in Figure 4, in which latter position the interchangeable platform or container 2 has already been removed from the lorry chassis down onto the ground. When the lorry is driven forwards from the stage shown in Figure 4, the hook 11 of the hook part 5 is detached from the gasping part 12 of the interchangeable platform or container 2.

The pulling of the interchangeable platform or container 2 from the ground onto the lorry chassis takes place in the reversed sequence, as compared with the above.

If the load carried by the interchangeable platform or container 2 is to be dumped by means of the loading apparatus, at the stage of Figure 1 or Figure 2, the locking device 18 is kept locked and the dumping movement is performed by means of the main piston and cylinders 13 as shown in Figure 7 or 8. In such a case, the loading apparatus remains locked at the rear frame 3 by means of the locking device 18 relative the bottom beams of the interchangeable platform or container 2, and all of the three parts of the loading parts of the loading apparatus, i.e. the hook part 5, the middle frame part 4 and the rear frame part 3, supported by the interchangeable platform or container 2, pivot about the articulation points 6.

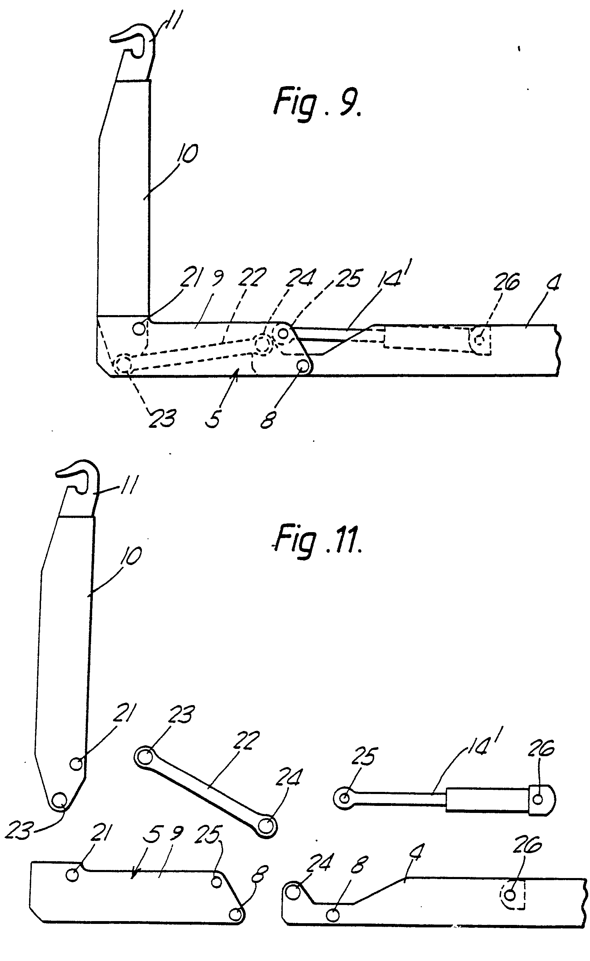

The additional improvement in accordance with the invention for the apparatus described above is provided by means of the arm construction illustrated in Figures 9 to 11. The hook part 10 is attached, by means of an articulated joint 21, the end part 9 of the L-shaped folding frame 5. Between the hook part 10 and the middle frame part 4 is attached an arm 22 by means of articulated joints. The articulated joint 23 between the arm 22 and the hook part 10 is located below the articulation point 21 between the folding frame 5 and the hook part 10. The articulated joint 24 between the arm 22 and the middle frame part 4 is located further ahead and at a higher level as compared with the articulated joint 8 between the folding frame part 5 and the middle frame part 4.

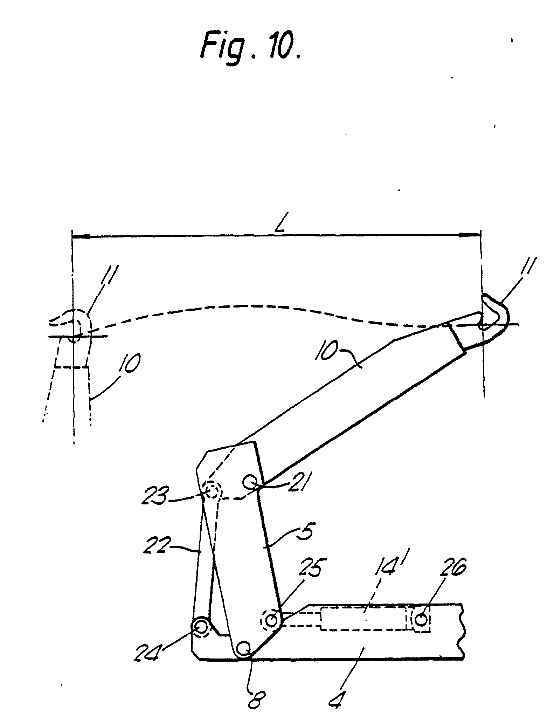

As shown in Figures 9 to 11, the piston and cylinder device 14 used in the apparatus shown in Figures 1 to 8 has been replaced by a horizontal piston and cylinder device 14' extending between the folding frame part 5 and the middle frame part 4. The articulation point 25 between the piston and cylinder device 14' and the folding frame part 5 is located at a higher level than the articulation point 8 between the middle frame part 4 and the folding frame part 5. The articulated joint between the piston and cylinder device 14' and the middle frame part 4 is denoted with reference numeral 26. When the piston and cylinder device 14' is retracted, the folding frame part 5 pivots upwards as shown in Figure 10.

Between the articulation points 21, 23, 24, and 8, there is an articulated quadrangle consisting of four articulated arms, which said quadrangle consisting of four articulated arms, which said quadrangle, on pivoting of the folding frame part 5, determines the path of movement of the hook 11 located at the upper end of the hook part 10. It can be ascertained that, by using such an articulated quadrangle, it is possible to lengthen the substantially horizontal portion of the path of movement so that its length L is about double as compared with the horizontal portion 15 of the path of movement of the prior-art apparatus shown in Figure 6. Instead of an arc of a circle, the shape of the path of movement is now a gentle curved path substantially in the form of an elongate letter S.

The invention is not restricted to the embodiment described above as it may vary in different ways falling within the scope of the appended claims. The pivoting movement of the folding frame part 5 can also be produced by some other means besides by means of the cylinder 14'.

**Claim**

Apparatus for moving a cargo carrier (2), such as an interchangeable platform or container, onto a vehicle and for moving the carrier (2) from the vehicle and for dumping the cargo from the carrier (2), comprising a horizontal frame part (4) pivotably connected by a transverse horizontal shaft (7) located at its rear end to a horizontal rear frame part (3) pivotably connected at its rear end to the vehicle chassis (1), an actuating device (13) connected to the vehicle chassis (1) for pivoting the horizontal frame part (4), a folding frame part (5) having an end part (9) pivotably attached to the front end of said horizontal frame part (4) by a transverse horizontal shaft (8), and having a hook part (10) provided at its upper end with a grasping member (11) for engaging the cargo carrier (2), characterized in that the hook part (10) is pivotably connected by a horizontal shaft (21) to the end part (9) and an arm (22) is attached by respective articulated joints (23, 24) to the hook part (10) and the horizontal frame part (4) with the articulation joint (23) between the arm (22) and the hook part (10) located lower than the articulation joint (21) between the end part (9) and the hook part (10) and the articulation joint (24) between the arm (22) and the horizontal frame (4) is located further forwardly than the articulation shaft (8) between the end part (9) and the horizontal frame (4), and that between the end part (9) and the horizontal frame (4) a second actuating device (14') is provided for pivoting the end part (9) relative to the horizontal frame part (4).

**Patentanspruch**

Vorrichtung zum Bewegen eines Ladegutträgers (2), wie einer auswechselbaren Palette oder eines Containers, auf ein Fahrzeug und zum Bewegen des Trägers (2) von dem Fahrzeug und zum Kippen des Ladegutes aus dem Träger (2), mit einem horizontalen Rahmenteil (4), der mittels einer an seinem hinteren Ende gelegenen horizontalen Achse (7) verschwenkbar mit einem horizontalen hinteren Rahmenteil (3) verbunden ist, welcher an seinem hinteren Ende schwenkbar an dem Fahrgestell (1) des Fahrzeuges befestigt ist, mit einer mit dem Fahrgestell (1) des Fahrzeuges verbundenen Antriebseinrichtung (13) zum Verschwenken des horizontalen Rahmenteils (4) und mit einem Klapprahmenteil (5), der einen mittels einer querliegenden horizontalen Achse (8) schwenkbar an dem vorderen Ende des horizontalen Rahmenteils (4) angebrachten Endabschnitt (9) und einen an seinem oberen Ende mit einem Greifteil (11) zum Erfassen des Ladegutträgers (2) versehenen Hakenabschnitt (10) besitzt, dadurch gekennzeichnet, daß der Hakenabschnitt (10) mittels einer horizontalen Achse (21) schwenkbar mit dem Endabschnitt (9) verbunden ist, ein Arm (22) je mit Gelenkverbindungen (23, 24) an dem Hakenabschnitt (10) bzw. an dem horizontalen Rahmenteil (4) angebracht ist, wobei die Gelenkverbindung (23) zwischen dem Arm (22) und dem Hakeabschnitt (10) tiefer gelegen ist, als die Gelenkverbindung (21) zwischen dem Endabschnitt (9) und dem Hakenabschnitt (10) und die Gelenkverbindung (24) zwischen dem Arm (22) und dem horizontalen Rahmen (4) weiter vorne gelegen ist, als die Gelenkachse (8) zwischen dem Endabschnitt (9) und dem horizontalen Rahmen (4), und daß zwischen dem Endabschnitt (9) und dem horizontalen Rahmen (4) eine zweite Antriebseinrichtung (14') vorgesehen ist, um den Endabschnitt (9) bezüglich des horizontalen Rahmenteils (4) zu verschwenken.

**Revendication**

Appareil pour charger un porte-charge (2), tel qu'un plateau ou conteneur interchangeable, sur un véhicule et pour décharger le porte-charge (2) du véhicule, et pour déverser la charge du porte-charge (2), comprenant une partie de cadre horizontal (4) reliée de façon pivotante par un arbre horizontal (7) transversal situé à son extrémité arrière à une partie de cadre arrière (3) horizontal reliée de façon pivotante à son extrémité arrière au châssis (1) du véhicule, un dispositif d'actionnement (13) relié au châssis (1) du véhicule pour faire pivoter la partie de cadre horizontal (4), une partie de cadre rabattable (5) ayant une partie terminale (9) fixée de façon pivotante à l'extrémité frontale de ladite partie de cadre horizontal (4) par un arbre horizontal transversal (8), et ayant une partie à crochet (10) munie à son extrémité supérieure d'un élément de préhension (11) pour saisir le porte-charge (2) caractérisé en ce que la partie à crochet (10) est reliée de façon pivotante par un arbre horizontal (21) à la partie terminale (9) et en ce qu'un bras (22) est fixé par des joints articulés respectifs (23, 24) à la partie à crochet (10) et à la partie de cadre horizontal (4), le joint d'articulation (23) entre le bras (22) et la partie à crochet (10) étant situé plus bas que le joint d'articulation (21) entre la partie terminale (9) et la partie à crochet (10), et le joint d'articulation (24) entre le bras (22) et le cadre horizontal (4) étant situé plus en avant que l'arbre d'articulation (8) entre la partie terminale (9) et le cadre horizontal (4), et en ce qu'entre la partie terminale (9) et le cadre horizontal (4) est prévu un second dispositif d'actionnement (14') pour faire pivoter la partie terminale (9) par rapport à la partie de cadre horizontal (4).

Fig.1.

Fig.2.

1

Fig .3.

Fig .4.

## Fig.5.

## Fig.6.

Fig. 7.

EP 0 192 689 B1

Fig. 8.

Fig . 9.

Fig .11.

6

Fig. 10.